# EUROPÄISCHE PATENTSCHRIFT

(11) **EP 0 702 606 B1**
(45) Veröffentlichungstag und Bekanntmachung des Hinweises auf die Patenterteilung: **17.02.1999**
(21) Anmeldenummer: 95913858.7
(22) Anmeldetag: 21.03.1995
(51) Int. Cl.: B21D 51/00, B21D 43/05, B23P 21/00

(54) **VERFAHREN ZUR HERSTELLUNG VON HOHLKÖRPERN**
HOLLOW BODY PRODUCTION PROCESS
PROCEDE DE PRODUCTION DE CORPS CREUX

(30) Priorität: 24.03.1994 DE 4410178
(43) Veröffentlichungstag der Anmeldung: 27.03.1996
(73) Patentinhaber: BENTELER AG, D-33104 Paderborn (DE)
(72) Erfinder: STREUBEL, Wolfgang, D-32756 Detmold (DE); BUSCHSIEWEKE, Otto, D-33102 Paderborn (DE)
(74) Vertreter: Bockermann, Rolf, Dipl.-Ing.
(86) Internationale Anmeldenummer: DE9500398
(87) Internationale Veröffentlichungsnummer: WO9525609

(56) Entgegenhaltungen:
- US-A- 3 715 077
- US-A- 4 847 965
- PATENT ABSTRACTS OF JAPAN vol. 7, no. 246 (M-253) 2. November 1983 & JP,A,58 132 430 (HITACHI SEISAKUSHO KK) 6. August 1983
- PATENT ABSTRACTS OF JAPAN vol. 6, no. 190 (M-159) 29. September 1982 & JP,A,57 096 744 (SANYO KIKO) 16. Juni 1982

## Beschreibung

Die Erfindung betrifft ein Verfahren zur Herstellung von aus mindestens zwei schalenartigen Einzelteilen zusammengesetzten Hohlkörpern aus Stahlblech gemäß den Merkmalen im Oberbegriff des Anspruchs 1.

Aus schalenartigen Einzelteilen bestehende Hohlkörper werden in der Praxis in vielfältiger Weise eingesetzt. Ein spezielles Anwendungsgebiet sind jedoch die Fahrwerke von Kraftfahrzeugen, wo Hohlkörper aus schalenartigen Einzelteilen in diversen Ausgestaltungen zum Einsatz gelangen.

Da es sich bei den in Rede stehenden Hohlkörpern durchweg um Massenartikel handelt, erfolgt ihre Herstellung zumeist auf Fertigungsstraßen. Hierbei wird jedes schalenartige Einzelteil auf einer eigenen Fertigungsstraße hergestellt. Dazu werden mehrere Umformvorrichtungen mit voneinander abweichenden Umformwerkzeugen im Fertigungsprozeß hintereinander angeordnet und durch Transportmittel verbunden, welche das Einzelteil im jeweiligen Umformzustand von der einen zur anderen Umformvorrichtung verlagern.

Die Bereitstellung der diversen Umformvorrichtungen sowie der diese Umformvorrichtungen verbindenden Transportmittel ist aber nicht nur mit einem hohen baulichen Aufwand, sondern auch mit einem erheblichen Raumbedarf verbunden.

Am Ende der Fertigungsstraßen liegen die Einzelteile je nach ihrer Größe ungeordnet oder geordnet, beispielsweise in einem Stapel, vor. Zur Herstellung der Hohlkörper müssen dann die Einzelteile mittels entsprechender Vorrichtungen zusammengeführt und dann in einer besonderen Montageeinheit verbunden werden. Dieses Zusammenführen verlangt wiederum spezielle Transportmittel, um die Einzelteile aus den Fertigungslagen am Ende der Fertigungsstraßen in die Fügelagen der Montageeinheit zu überführen. Auch dies ist mit hohen Investitionsmaßnahmen verbunden.

Darüberhinaus erfolgt der Zusammenbau der Einzelteile beim Fügevorgang in einer zusätzlichen Aufnahme zum Positionieren. Da diese Aufnahme sich im allgemeinen von den Positionierungen der Einzelteile in zumindest den letzten Umformvorrichtungen unterscheidet, erhöhen sich zwangsläufig die Fertigungsungenauigkeit bzw. die Schwankungen in der Toleranz der gefügten Teile in der Serienfertigung.

Aus der JP-A-58132430 ist ein Verfahren bekannt, bei dem zwei Einzelteile aus einem in Bandform bereitgestellten Ausgangsmaterial ausgestanzt und umgeformt werden. Anschließend werden die Einzelteile in eine Fördervorrichtung überführt und zur Weiterverarbeitung transportiert.

Der Erfindung liegt ausgehend vom Stand der Technik die Aufgabe zugrunde, ein Verfahren bereitzustellen, bei welchem mit einem geringeren Aufwand an Umformwerkzeugen eine präzisere Fertigung der Hohlkörper erzielt werden kann.

Die Lösung dieser Aufgabe wird gemäß der Erfindung in den im Anspruch 1 aufgeführten Merkmalen gesehen.

Der Kerngedanke der Erfindung besteht darin, daß die Einzelteile nunmehr in einer einzigen Vorrichtung so hergestellt werden, daß am Ende des Umformprozesses die zusammenzufügenden Einzelteile bereits in der Fügelage vorliegen. Dabei können je nach der Größe der Einzelteile diese gemeinsam in einer Umformvorrichtung oder jeder Einzelteil für sich in einer Umformvorrichtung in der Fügelage erzeugt werden. Am Ende des Umformprozesses ist es lediglich erforderlich, die Einzelteile in der Fügelage in die Montageposition zu überführen und miteinander zu verbinden. Da sich die Einzelteile bereits in der Fügelage befinden, brauchen keine komplizierten Transportmittel mehr eingesetzt zu werden, um die fertig umgeformten Einzelteile in die Montageposition zu verbringen. Sie brauchen quasi nur noch in einer Ebene übereinander geschoben zu werden. Desweiteren können auf diese Weise auch ggf. notwendige innere Verstärkungen problemlos eingesetzt werden.

Die Erfindung schafft also die Voraussetzungen für eine genauere Fertigung, insbesondere in der Serienfabrikation, bei vermindertem Vorrichtungsaufwand und Raumbedarf.

Eine vorteilhafte Ausführungsform der Erfindung ist in den Merkmalen des Anspruchs 2 gekennzeichnet. Bei dieser Verfahrensvariante werden die einen Hohlkörper bildenden Einzelteile nicht nur in einer einzigen Umformvorrichtung paarig hergestellt, sondern in dieser Umformvorrichtung auch zum Hohlkörper verbunden. Diese Verfahrensweise ist speziell für kleinere Einzelteile anwendbar. Die zu bildenden Einzelteile durchlaufen diverse nacheinander geschaltete Umformstationen in der Umformvorrichtung, wobei bei jedem Hub des Obergesenks der Umformvorrichtrnng alle in der Umformvorrichtung liegenden Teile zur selben Zeit umgeformt bzw. am Schluß zum Hohlkörper zusammengefügt werden.

Bei größeren Einzelteilen erweist sich das Verfahren gemäß Anspruch 3 als vorteilhaft. Hierbei sind dann bei z.B. zwei Einzelteilen pro Hohlkörper zwei Umformvorrichtungen nebeneinander getrennt angeordnet, die von den zu einem Hohlkörper zusammenzufügenden Einzelteilen paarig durchlaufen werden. Die fertigen Einzelteile werden nach dem Verlassen der Umformvorrichtungen quer in eine Fügevorrichtung überführt und hier zusammengefügt.

Als besonders vorteilhaft erweist sich im Rahmen der Erfindung das Stanznieten gemäß Anspruch 4. Hierbei werden sämtliche benötigten Stanznieten über entsprechende Transportmittel den Montagebereichen zugeführt, so daß beim Zusammenfügen der Einzelteile auch die feste Verbindung durch Stanznieten durchgeführt wird.

Der besondere Vorteil beim Stanznieten liegt im Rahmen der Erfindung darin, daß das Stanznieten dem Herstellungstakt der Einzelteile bei den verschiedenen Umformvorgängen (Schneiden, Lochen, Ziehen, Bördeln) von der Schnelligkeit her ohne weiteres angepaßt werden kann. Die Wirtschaftlichkeit des Fügevorgangs wird dadurch zusätzlich erhöht.

## Patentansprüche

1. Verfahren zur Herstellung von aus mindestens zwei schalenartigen Einzelteilen zusammengesetzten Hohlkörpern aus Stahlblech, bei welchem zunächst Vorformteile aus Platinen gestanzt, die Vorformteile anschließend zu den Einzelteilen umgeformt sowie ggf. gelocht und die Einzelteile schließlich durch Stanznieten oder Kondensatorentladungsschweißen zu den Hohlkörpern verbunden werden, **dadurch gekennzeichnet,** daß die jeweils einen Hohlkörper bildenden Einzelteile in der Fügelage paarig gefertigt, anschließend in der Fügelage in die Montageposition zusammengeführt und dann miteinander verbunden werden.

2. Verfahren nach Anspruch 1, **dadurch gekennzeichnet,** daß die einen Hohlkörper bildenden Einzelteile paarig in einer Umformvorrichtung in mehreren taktweise aufeinanderfolgenden Fertigungsschritten hergestellt, anschließend in der Umformvorrichtung zusammengeführt und dann in der Umformvorrichtung verbunden werden.

3. Verfahren nach Anspruch 1, **dadurch gekennzeichnet,** daß die einen Hohlkörper bildenden Einzelteile paarig in nebeneinander angeordneten getrennten Umformvorrichtungen in mehreren taktweise aufeinanderfolgenden Fertigungsschritten hergestellt, anschließend in eine Fügevorrichtung zusammengeführt und hier miteinander verbunden werden.

4. Verfahren nach einem der Ansprüche 1 bis 3, wobei die Einzelteile durch Stanznieten zusammengefügt werden, **dadurch gekennzeichnet,** daß nach dem oder beim Zusammenführen der Einzelteile in die Montageposition alle Stanznieten gleichzeitig in die Nietposition verlagert werden.

## Claims

1. A method of producing hollow members, assembled from at least two shell-like individual parts, from sheet steel, wherein preformed parts are first punched from blanks, the preformed parts are then shaped into the individual parts and perforated if required, and the individual parts are finally connected by punch riveting or capacitor discharge welding to produce the hollow members, characterised in that the individual parts forming each hollow member are produced in pairs in the joining position, are then while in the joining position brought together into the assembly position and are then connected together.

2. A method according to claim 1, characterised in that the individual parts forming a hollow member are produced in pairs in a shaping device in a number of production steps following one another in a cycle and are then brought together in the shaping device and then joined in the shaping device.

3. A method according to claim 1, characterised in that the individual parts forming a hollow member are produced in pairs in adjoining separate shaping devices in a number of production steps following one another in a cycle and are then brought together in a joining device and joined to one another therein.

4. A method according to any of claims 1 to 3, wherein the individual parts are joined together by punch riveting, characterised in that after or while the individual parts are being brought together into the assembly position, all the punch rivets are simultaneously moved into the riveting position.

## Revendications

1. Procédé pour la préparation de corps creux en tôle d'acier, constitués par l'assemblage d'au moins deux éléments individuels en forme de coquille, procédé dans lequel on procède d'abord au découpage d'éléments préformés à partir de flans, les éléments préformés sont ensuite retransformés en éléments individuels et éventuellement percés et les éléments individuels sont finalement assemblés sur les corps creux par des rivets à découper ou par soudure par des charges à condensateur, caractérisé en ce que les éléments individuels formant un corps creux sont fabriqués par paires dans la position de liaison ou jonction, enfin dans la position de liaison ou jonction, ils sont amenés au poste de montage pour y être raccordés ensemble,

2. Procédé selon la revendication 1, caractérisé en ce que les éléments individuels formant un corps creux sont fabriqués par paires dans un dispositif de formage selon plusieurs étapes de fabrication consécutives en pas à pas, et finalement amenés dans le dispositif de formage puis raccordés dans le dispositif de formage.

3. Procédé selon la revendication 1, caractérisé en ce que les éléments individuels formant un corps creux sont fabriqués par paires dans les dispositifs de formage séparés disposés côte à côte selon plusieurs étapes de fabrication consécutives en pas à pas, et enfin, ils sont amenés dans un dispositif de liaison ou jonction pour y être raccordés ensemble.

4. Procédé selon l'une des revendications 1 a 3, les éléments individuels étant assemblés au moyen de rivets de découpe, caractérisé en ce que lors de l'amenée des éléments individuels dans la position de montage, tous les rivets de découpe sont déplacés simultanément dans la position de rivetage.
